# EUROPEAN PATENT APPLICATION

(11) **EP 2 418 462 A1**
(43) Date of publication of application: **15.02.2012**
(21) Application number: 11175691.2
(22) Date of filing: 28.07.2011
(51) Int. Cl.: G01D 4/00

(54) **Sub-metering hardware for measuring energy data of an energy consuming device**

(30) Priority: 10.08.2010 US 853342
(71) Applicant: General Electric Company, Schenectady, NY 12345 (US)
(72) Inventor: Kobraei, Henry, Louisville, KY Kentucky 40225 (US); Besore, John, Louisville, KY Kentucky 40225 (US); Bultman, Robert, Louisville, KY Kentucky 40225 (US); Worthington, Timothy, Louisville, KY Kentucky 40225 (US); Finch, Michael F., Louisville, KY Kentucky 40225 (US); Drake, Jeff, Louisville, KY Kentucky 40225 (US)
(74) Representative: Illingworth-Law, William Illingworth

(57) **Abstract**

A sub-meter device (704) for use in a home energy management (HEM) network (700). The sub-meter device measure power characteristics related to usage of an appliance (702) (or other device) within a HEM network and provides such data to a home energy controller (706) or the like. The sub-meter device can include one or more sensors (724), such as a current transformer, Rogowski coil, shunt resistor, or hall effect sensor, for collecting data relating to at least one of real power consumption, reactive power consumption, line frequency, line voltage, power factor, leading/lagging voltage-current comparison, and apparent power, etc.

## Description

### BACKGROUND OF THE DISCLOSURE

The following disclosure relates to energy management, and more particularly to energy management of household consumer appliances, as well as other energy consuming devices and/or systems found in the home. The present disclosure finds particular application to a device which controls operation of consumer appliances, as well as other energy consuming devices and/or systems, and acts as a gateway between a Utility company network and the consumer appliances, as well as other energy consuming devices and/or systems. The controller/gateway device to be discussed below is at times called herein a Home Energy Gateway (HEG).

Currently Utility companies commonly charge a flat rate for energy, but with the increasing cost of fuel prices and high energy usage during certain parts of the day, Utility companies have to buy more energy to supply customers during peak demand. Consequently, Utility companies are beginning to charge higher rates during peak demand. If peak demand can be lowered, then a potential cost savings can be achieved and the peak load that the Utility company has to accommodate is lessened.

One proposed third party solution is to provide a system where a controller "switches" the actual energy supply to the appliance or control unit on and off. However, there is no active control beyond the mere on/off switching. It is believed that others in the industry cease some operations of certain appliances during on-peak time.

Additionally, some electrical Utility companies are moving to an Advanced Metering Infrastructure (AMI) system which needs to communicate with appliances, HVAC, water heaters, etc., in a home or office building. All electrical Utility companies (more than 3,000 in the US) will not be using the same communication method to signal in the AMI system. Similarly, known systems do not communicate directly with the appliance using a variety of communication methods and protocols, nor is a modular and standard method created for communication devices to interface and to communicate operational modes to the main controller of the appliance.

Home energy management (HEM) systems are becoming a key to reducing energy consumption in homes and buildings, in a consumer friendly manner. Existing HEMs are commonly placed in one of two general categories:
- In the first category, the HEM is in the form of a special custom configured computer with an integrated display, which communicates to devices in the home and stores data, and also has simple algorithms to enable energy reduction. This type of device may also include a keypad for data entry or the display may be a touch screen. In either arrangement, the display, computer and key pad (if used) are formed as a single unit. This single unit is either integrated in a unitary housing, or if the display is not in the same housing, the display and computer are otherwise connected/associated upon delivery from the factory and/or synchronized or tuned to work as a single unit.
- In the second category, the HEM is in the form of a low cost router/gateway device in a home that collects information from devices within the home and sends it to a remote server and in return receives control commands from the remote server and transmits it to energy consuming devices in the home. In this category, again, as in the first, the HEM may be a custom configured device including a computer and integrated/associated display (and keypad, if used) designed as a single unit. Alternately, the HEM maybe implemented as home computer such as lap top or desk top operating software to customize the home computer this use.

Both of the current existing types have significant disadvantages due to higher consumer cost, low flexibility and increased system complexity.

The first category requires a large upfront cost to the consumer, because the cost of providing an integrated display on the HEM very expensive. In addition, the electronics required to drive the display is complex and expensive. Further, from a consumer point of view, they are forced to add one more display screen to their home in addition to the home computer, smart phones, televisions and the displays on pre-existing home devices such as thermostats, appliance displays etc.

The second category of HEM involves a substantial cost to provide the server infrastructure and data transfer. In addition, this type of HEM must be connected continuously with a remote server otherwise energy data logging and energy saving commands for the devices in the home will be lost during service disruptions. In addition, this configuration requires connection to the Internet to access and view data. Therefore this second configuration is very limiting in areas where Internet penetration is very low

To be commercially practical a HEM should result in a payback of less than a year for the consumer through energy savings. Current HEM systems result in payback of about 3-5 years at best. Therefore, since the standard life of an electronic device is about 5 years, the consumer is never paid back for their investment; as they will need to procure a new device before the investment payback period is reached.

Key functions of a HEM include:
- Creates a network of energy consuming devices within the home,
- Measures the consumption of the whole home/building or individual devices,
- Records and stores energy consumption information in a database, and
- Enables consumer interface with all energy consuming devices in a home to:
- view consumption data of individual devices
- set preferences for operation of energy consuming devices at different times
- during the day or at different energy pricing levels
- control/program energy consuming devices.

For a HEM to achieve its intended function, all energy consuming, energy generating and energy measuring devices must communicate with the HEM through a network. The network of energy consuming devices usually employs a communication design which has very low power and low energy with a high degree of reliability. The data bandwidth required to support a network of energy consuming devices is much smaller than the data bandwidth required for the networking of consumer electronics products, which is usually high bandwidth and high speed. The networking standards, including the physical layer, networking layer and application layers are optimized for the end use.

Consumers want to view and control energy consumption information available thru the HEM, through a variety of consumer electronic devices available in the home. To enable this it is required that energy consumption and control information must be easily transferrable from the networks of energy consuming devices to networks of consumer electronics devices. In addition, consumers are more used to interacting with consumer electronics devices. So the consumer interaction data on a consumer electronics device should be able to flow into the network for energy consuming devices and to enable command and control of the energy consuming devices.

### SUMMARY OF THE DISCLOSURE

The device disclosed herein is a home energy gateway (HEG) that enables all the key functions of the HEM described above, and enables the flow of data between networks having different physical, link, network, transport and/or application layers, provides a lowest cost product to the consumer with the flexibility to interface with the HEM from any consumer electronics product already available in the home and/or replace any HEM in a home energy management network.

The HEG is a single board computer with a variety of communication interfaces combined with sufficient memory and computing resources to enable energy management of a home or building. This device does not have a dedicated display either on the device or in the system. It transmits the data stored within its memory to other display devices, to enable a consumer interface to the HEG.

In one embodiment, the HEG hardware comprises of a single board computer with the following specification:
- Samsung S3C2450 32bit RISC Microprocessor ARM926EJS, 404MHz
- DDR2 SDRAM (32MB)
- NAND Flash Memory for Embedded Linux & HEG Software (16MB)
- NAND Flash Memory for Database Storage (16MB)

The single board computer has three communication interfaces with different physical, networking and application layers.

The HEG it has an Ethernet and Wifi interface with the following specification:
- IEEE 802.11 big Wi-Fi
- WPA, WPA2, WEP-40, WEP-104, 802.1x, PEAP, LEAP, TLS, TTLS, FAST
- MAC Address Filtering
- 1011 00 Base-T Ethernet Connectivity
This interface is referred to as the first interface or first network throughout this document.

The HEG of one embodiment also has two Zigbee Interfaces of the following specification:
- IEEE 802.15.4 Compliant 2.4GHz Wireless Interface
- Smart Energy Profile, Home Automation Profile
- Transmit Power: 20dBm, Receive Sensitivity. 0 ∼ -100dBm
- AES 128-bit Encryption
- Install Code using 128-bit Oseas Hash Function
- ECC Key Exchange using Certicom Certificates
- SEP 1.0 Security Requirements
- CBKE ZigBee Link Key Security
- ZigBee Pro Feature Set

Two Zigbee communication interfaces are provided so that HEG can talk to two separate energy networks.

Using one Zigbee interface,(referred to as the second interface or second network) the HEG communicates with the smart meter network. This interface reads the smart meter, an energy-metering device, and records the data in the database of the HEG.

The HEG communicates to the devices within the home using the other Zigbee communication interface(referred to as the third interface or third network). Using this interface, the HEG reads the consumption of the individual energy consuming devices and records it in the database.

Utility communications such as price signals, demand response signals and text messages are received through the second interface, recorded in the database, and communicated to the devices in the home through the third interface. The command and control information of the energy consuming devices and their response to Utility signals is received through the third communication interface, recorded in a database, and communicated to the Utility company via the second interface, the communication being routed through the Utility smart meter.

The HEG can also be programmed to vary the response of energy consuming devices to utility communication based on consumer preferences. The consumer may, if desired, program the schedule, mode of operation and create unique device response to utility messages. This programming is communicated through the first interface.

The stored events, energy data, utility messages and consumer setting preferences are accessed also accessed through the first communication interface, which operates at a higher bandwidth and uses a consumer electronics friendly communication protocol. For example, in some embodiments this communication could be over Wifi or Ethernet.

The user interface is an application that resides in one of the consumer electronics products in a home or the home computer. These home devices communicate to the HEG through a predefined communication protocol. The user interface may request specific data from the HEG like historical electricity consumption information and the HEG can push information to devices in the Local Area Network (LAN), like price changes or utility messages, with all communication exchanges occurring thru commands based on this communication protocol. In addition, the energy consuming devices can be controlled or interfaced through the HEG, the user interface communicating with the HEG using this communication protocol over the first interface and the HEG communicating with the energy consuming devices with a low bandwidth protocol using a different physical communication layer.

The term communication protocol refers to three aspects language, transport, and session. The term language is defined as what is used to communicate data or commands such as XML, JSON-RPC, XML-RPC, SOAP, bit stream, or line terminated string. The term transport is defined as the protocol used to deliver the data or commands such as UDP, TCP, HTTP. Session is defined as terms such as, the Device pushing data via a socket based connection, or the Device sending data in response to being polled. Examples of data being pushed are TCP socket streams, and examples of polling are the restful create, read, update, and delete methods.

The HEG plays a key role for the Utility company in registering and communicating with devices within the home. Typical devices that have to work with the smart grid thru the smart meter need to be registered with the smart meter. This means that for every energy consuming device that is installed in a consumer's home, the consumer has to contact the Utility and provide them an install code to register the device, which requires time and resources for both the Utility Company and the consumer. Once the HEG is registered to the smart meter, the HEG then acts as a single point gateway for the Utility Company. In this way all other devices in the home are registered with the HEG and communicate with the HEG. The HEG then summarizes device actions, responses and status and communicates a single message to the Utility Company. This saves resources and infrastructure for the Utility Company's meter system as there is only one device communicating from the home, rather than 10 to 15 devices receiving messages, which would otherwise require a large amount of bandwidth.

With communication protocols in a home converging to common standards, the HEG can also be used to network other devices within the home and store data. For example it could monitor the health of consumers living in a home. A bathroom weighing scale can be enabled with a communication interface, and the weight of a person can be automatically read off the HEG and stored in the data base with a time stamp, every time a person steps on the scale. The device could similarly read other health parameters like blood pressure, glucose, temperature etc.

In the same way, energy and water consumption in a home is an indicator of daily life in a home. It can indicate activity in a home, the number of people in a home, the health of people in a home, safety and intrusion in a home.

The HEG could also operate with home automation and home security systems over open standards. This would coordinate the devices trying to control lighting, pool pumps, and other devices. They could also share information in new ways. The appliances could act as additional occupancy or intruder detection systems. For example, if the home security is in the away mode, and the refrigerator door opens, this could be passed to the security system, just like a motion sensor.

In accordance with another aspect, an energy consuming device comprises at least one energy consuming component, a sensor for collecting data from a power supplying conductor delivering power to the device, the sensor configured to collect data relating to electrical usage of the at least one component and/or properties of power provided to the device via the power supplying conductor, and a communication interface for communicating the data (e.g., to a remote energy management system device). The sensor can collect data relating to at least one of real power consumption, reactive power consumption, line frequency, line voltage, power factor, leading/lagging voltage-current comparison, and apparent power. The sensor can include at least one of a current transformer, Rogowski coil, shunt resistor, or hall effect sensor. The communication interface can include a display for displaying the collected data to user, and a control board for controlling at least one aspect of operation of the energy consuming device. The sensor can be included on the control board. The energy consuming device can be at least one of a washer, a dryer, a refrigerator, a cooking product, a dishwasher, a dehumidifier, and HVAC equipment.

In accordance with yet another aspect, a sub-meter device for monitoring usage of an energy consuming device in a residential energy management system comprises a sensor for collecting data from a power supplying conductor delivering power directly to the energy consuming device, and a communication interface for communicating the data to a remote energy management system device. The sensor is configured to collect data relating to electrical usage of the device and/or properties of power provided to the device via the power supplying conductor.

The sensor can collect data relating to at least one of real power consumption, reactive power consumption, line frequency, line voltage, power factor, leading/lagging voltage-current comparison , and apparent power. The at least one sensor and communication interface can be contained in a common housing. The sub-meter device can further comprise a second communication interface for communicating with the energy consuming device. The sensor and communication interface can be contained in a modular housing having at least two prongs designed to be plugged into a wall outlet for receiving power, and having a socket for receiving the power supplying conductor for transmitting power to the energy consuming device, whereby the common housing can be plugged into a wall socket and the energy consuming device can be plugged into the socket of the housing. The sensor can include at least one of a current transformer, Rogowski coil, shunt resistor, and/or hall effect sensor. The sub-meter can include a display for displaying the collected data to a user. The sensor can be integrated into a power supply cord of the energy consuming device.

In accordance with still another aspect a residential energy management system comprises an energy consuming device, a power supplying conductor connected to the energy consuming device for delivering power thereto, a sub-meter device, and an energy management controller configured to control at least one aspect of operation of the energy consuming device. The at least one sub-meter device includes a communication interface for communicating the collected data to the energy management controller for use by the energy management controller in controlling the energy consuming device.

In accordance with still yet another aspect, an energy management controller for a residential energy management system comprises a processor, and a communication interface for communicating with the sub-meter device.

In accordance with another aspect, a method of managing a residential energy consuming device comprises using a sensor to collect data from a power supplying conductor delivering power to the energy consuming device, communicating the collected data to an energy management controller remote from the sensor, and controlling at least one aspect of the operation of the energy consuming device in response to the collected data, wherein the sensor is configured to collect data relating to electrical usage of the device and/or properties of power provided to the device via the power supplying conductor.

### BRIEF DESCRIPTION OF THE DRAWINGS

Figure 1 illustrates a system in which the concepts of the present application are implemented.

Figure 2 is a block diagram of a Home Energy Gateway (HEG) of the present application.

Figure 3 is a hardware block diagram of the HEG.

Figures 4A-4P illustrates views of the physical HEG device.

Figure 5 is a flow diagram for connecting the HEG.

Figure 6 is a graphical illustration of a step in setting up the HEG.

Figure 7 is a graphical illustration of a step of connecting the HEG to a WiFi access point.

Figure 8 is a graphical illustration of a step of connecting the HEG to the Internet.

Figure 9 is a graphical illustration of a step of connecting the HEG and a smart meter.

Figure 10 is a graphical illustration of a step of making connections to appliances.

Figure 11 illustrates remote agent data access.

Figure 12 is an example message payload to update a schedule.

Figure 13 is a block diagram of a home energy management system including an exemplary sub-meter for measuring power properties of an associated device.

Figure 14 is another block diagram a home energy management system including another exemplary sub-meter integrated into an energy consuming device.

Figure 15 is a block diagram illustrating the details of an exemplary sub-meter device.

Figure 16 is a flow chart illustrating a method of performing diagnostics on an energy consuming device.

### DETAILED DESCRIPTION OF THE PREFFERED EMBODIMENTS

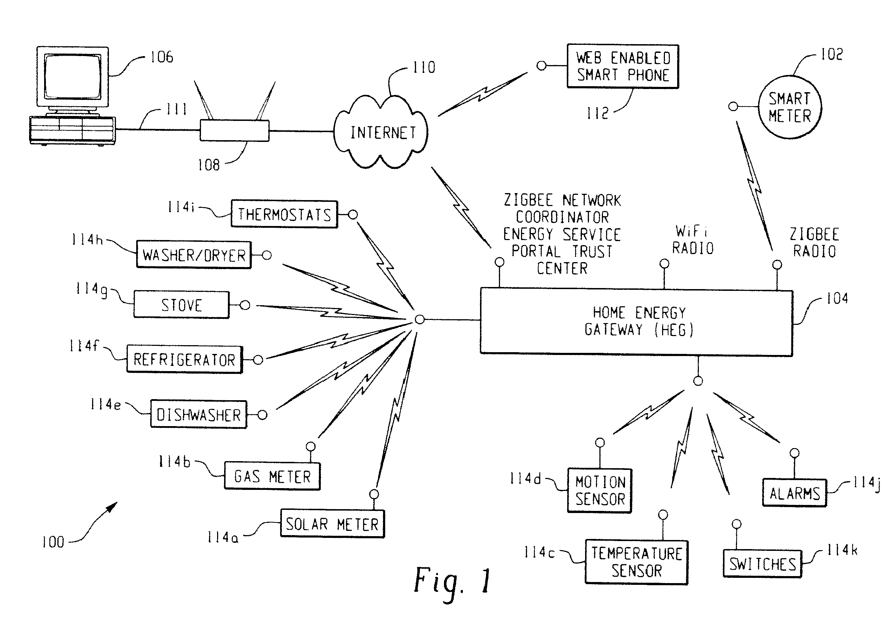

Figure 1 is an exemplary implementation of the energy management system 100 according to the present application.

The main source of information flow for the home is shown as smart electric meter 102 acting as trust center, coordinator, and/or and energy service portal (ESP), and which is configured to communicate with a home energy gateway (HEG) 104.

It is well known that these functions of smart meter 102 may be separated into different devices. For example, if the home does not have a smart meter 102 ---so the electric meter functions only as a meter to provide consumption information--- other components can be used to provide the additional capabilities. For example, homes without smart meter 102, can have the metering functionality of smart meter 102 replaced with a simple radio and CT configuration. Also, there are devices that can be placed on the outside of the meter to communicate its consumption by reading pulse counts or the rotating disk of the meter. In this embodiment, smart meter 102 is shown with an IEEE 802.15.4 (ZigBee) radio, but the meter could also communicate by a number of other standards such as IEEE 1901 (Home Plug Green Phy or Home Plug A V), among others.

Figure 1 is a computer 106 (such as a desk top, lap top of other computing device) attached to a modem/router 108, a common manner of attaching computers to the internet 110. In Figure 1, a computer connected to the router by a wired IEEE 802.3 (Ethernet) connection 111. However, it is to be appreciated the connection could be made by other known connections such as an IEEE 802.11 (Wifi) connection, power line communication or power line carrier (PLC) connection, among others. In one embodiment, the PLC connection is made using an adaptor such as sold by Netgear or other manufacturer for that purpose. Although a modem/router arrangement is shown in system 100, it is not essential, and the system would function for its primary purpose of monitoring and displaying energy consumption information without them. In that case computer 106 would connect directly to HEG 104 via a wired or wireless connection.

A web enabled smart phone 112 is configured to connect to HEG 104 for displaying data and configuring accessories (such as home appliances 114a-114k), except that only a wireless connection is available.

Accessories 114a-114k fall into two categories sensors and devices (where, depending on how they are used, some accessories fall into both categories). Examples of sensors include solar meters 114a, gas meters 114b, temperature sensors 114c, motion sensors 114d, and appliances reporting their power consumption (such as dishwashers 114e, refrigerators 114f, stoves 1 14g, washers/dryers 114h, etc.). Devices include thermostats 114i, alarms 114j and simple switches 114k, along with the appliances (e.g., dishwashers 114e, etc.), when performing their normal functions. The foregoing are just some examples of accessories to which the concepts of the present application will apply.

The HEG 102 is constructed with computational capabilities and multiple communication technologies. In contrast to existing controllers (such as an HEM) used in home energy systems, the special purpose HEG 102 is significantly smaller, cheaper, and consumes less power. The HEG 102 also has the capability of operating over multiple communication networks, which allows HEG 102 to acquire and manipulate data of one communication network (e.g., that which monitors/controls the home appliances) and to supply that manipulated data to another communication network (e.g., to the consumer electronics network, such as to a home computer, smart phone, web-enabled TV, etc.), even though these networks are not generally compatible. As another example, the HEG 102 is connected to system loads (e.g., the home appliances, etc.) over one type of communication network, to the Utility company over a different communication network, and to a display over a third different communication network.

In one particular embodiment connection to the display is via a WiFi communication network, connection to the Utility Company (over the meter) is via a ZigBee communication network, and connection to the home device/appliance network is over the third. Alternatively, in a home where the devices and Utility Company's rules are different, the data could be structured differently. For example, the whole home consumption could be available over the Internet (as it is in Allentown, PA pilot project), or via a ZigBee meter on the second network. Further, in addition to the display, several home automation devices including pool controllers, emergency generators, and storage batteries are designed to be accessed over Ethernet using Internet Protocol (IP).

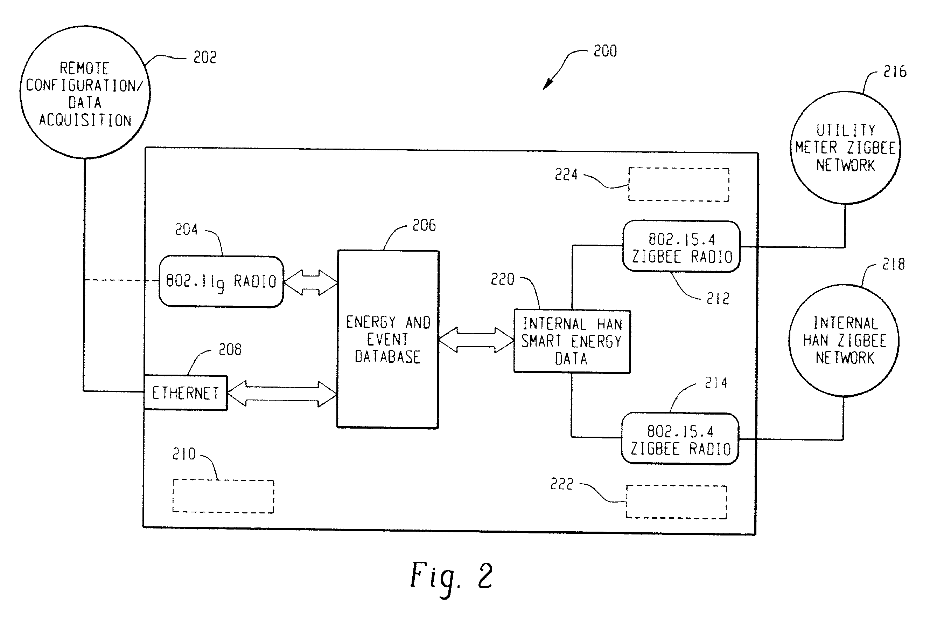

Turning to Figure 2 depicted is a block diagram 200 illustrating one embodiment of the HEG 102. On the left hand side of the figure outside of block diagram 200 is remote configuration and data acquisition block 202 (which is not part of HEG block diagram 200). The external data and remote configuration requests are received into block 200 via WiFi radio block 204, which in turn accesses energy and event database 206. The external data and remote configuration requests of block 202 could also enter block diagram 200 via Ethernet port 208 in order to access the energy and event database 206. In still a further embodiment a power line communication (PLC) adapter 210 (dotted lines) may be used with or as an alternative to the Ethernet port 208, in order to input the external data and remote configuration requests 202 into the energy and event database 206.

On the right hand side of Figure 2 is a first data interface block 212 (such as a 802.15.4 Zigbee radio) and a second data interface block 214 (such as a 802.15.4 Zigbee radio). The first data interface block 214 is configured to send and receive data and configuration messages to/from utility meter Zigbee network 216, and second data interface block 214 is configured to send and receive data and configuration messages to/from the internal HAN (e.g., data from appliances in the system) 218. The data and messages from these sources also connect to the energy and event database 206, via internal HAN smart energy block 220. The database functions will be covered in more detail later. In still a further embodiment power line interfaces 222, 224 (dotted lines) may be included with or as an alternative to the interfaces 212, 218.

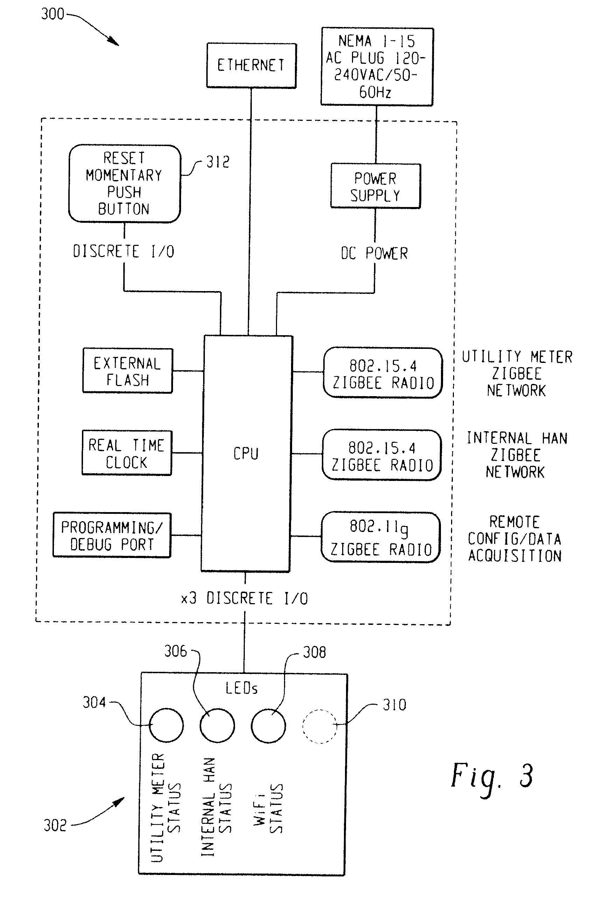

Figure 3 shows a more detailed hardware block diagram 300 of HEG 102. Of specific interest is input/output (I/O) block 302 at the bottom of the figure. The I/O block 302 consists of chip LEDs 304,306, and 308 which are used to convey network status for the three individual networks of the HEG 102. The LEDs convey status from off (no network), flashing (network available), to solid lit (joined network) for each network. Optionally an additional LED (not shown) may be provided to identify power availability. Also if additional networks are incorporated into the HEG 102 an additional LED may be add for the additional communication network. These simple status lights allow a user to confirm the HEG is working. By this design if there is an issue, a user may connect with an display device for more detailed investigation of the problem and to correct the Issue. Also depicted is a reset push button 312 which (as will be shown below) may be assessed by a user externally on the HEG unit itself.

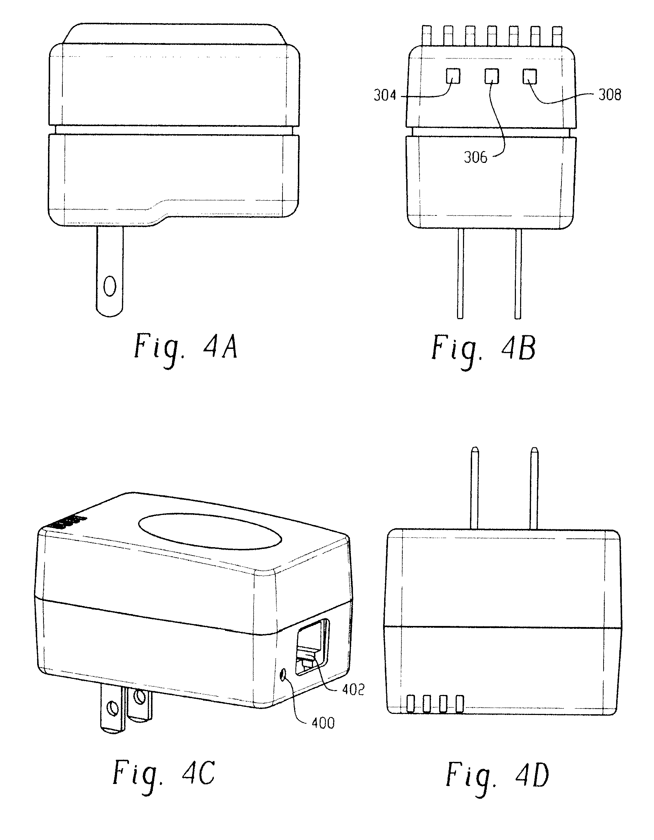

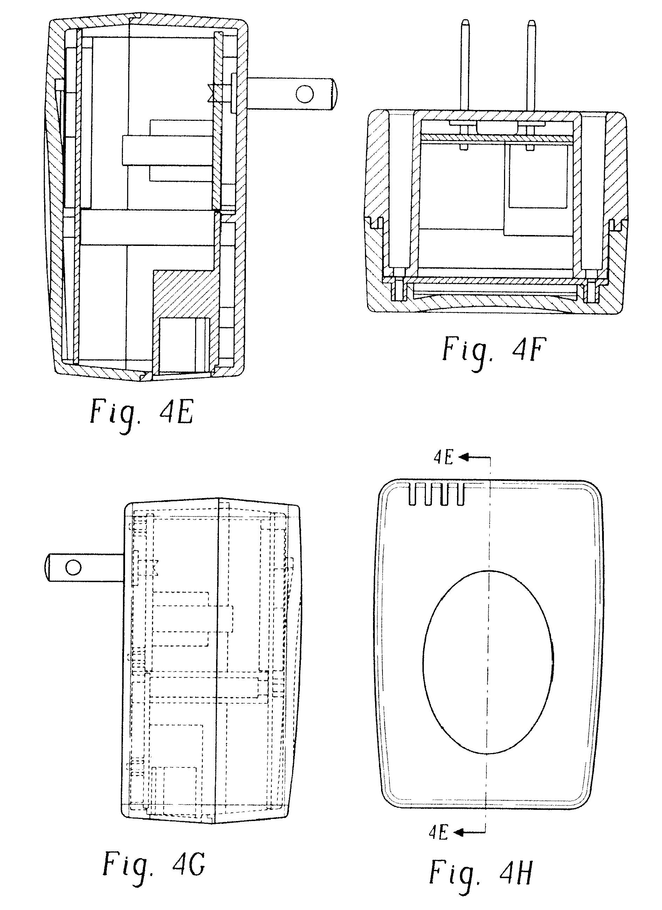

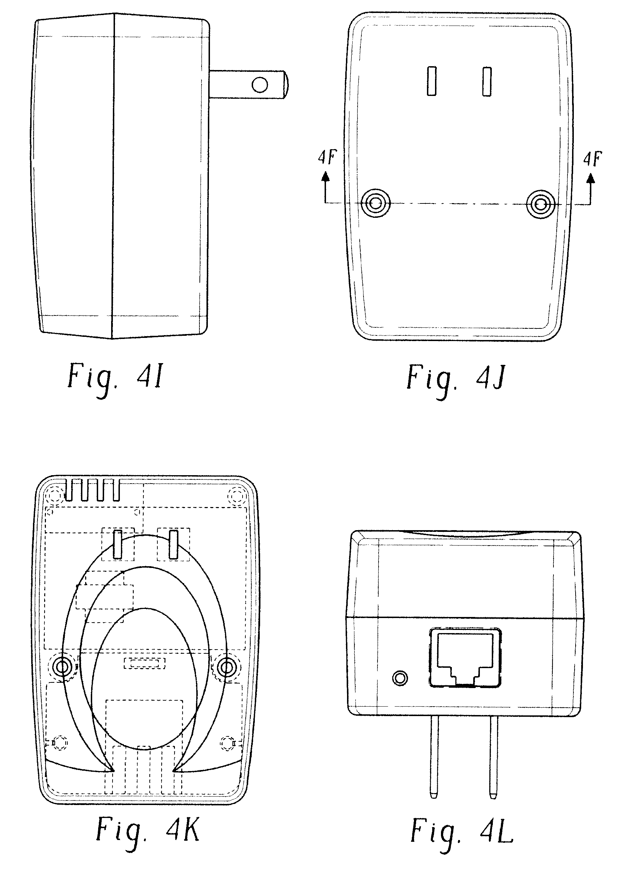

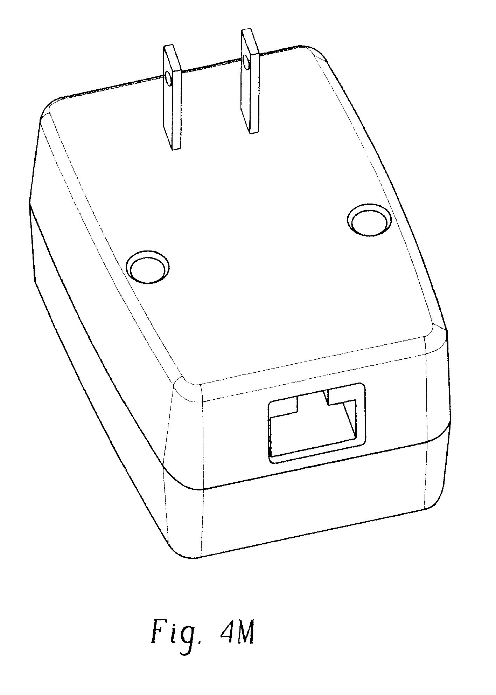

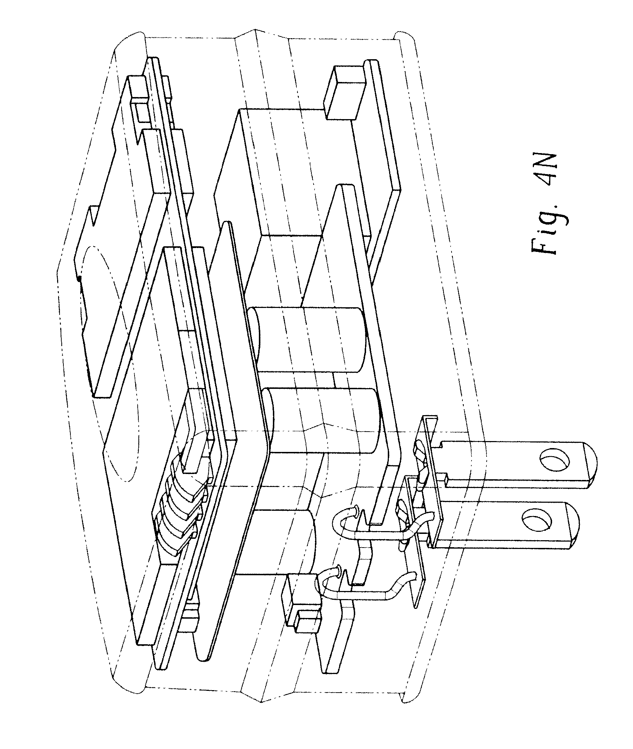

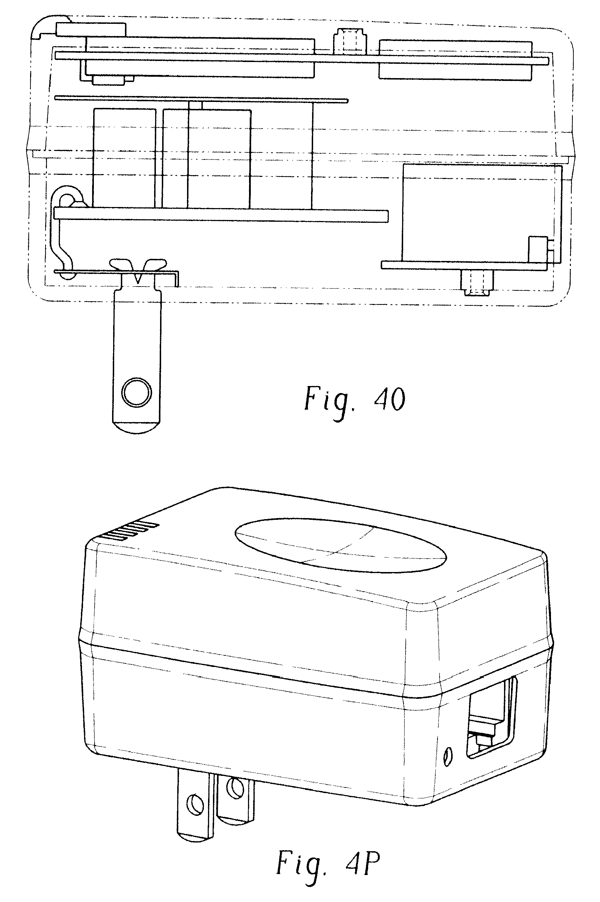

Figures 4A-4P illustrates various views of HEG 102. Not requiring a display or input keys on HEG 102 allows the HEG 102 to be configured in a very compact design. In one embodiment, this results in the HEG having dimensions of 53(W) x 72(H) x 55(D) mm (2.09(W) x 2.83(H) x 2.16(D) inches). With a depth (D) of 37mm (1.45 inches) minus the prongs of the plug. The volume of the HEG being 160 cm^3 and the weight of the HEG being 100g. It is therefore small enough to be plugged into a standard wall outlet, and does not need space on a counter, tabletop and does not need to be attached to a wall or other surface with screws or adhesive. Because it does not have a separate display or keyboard, there are no wires to add to clutter or get caught on items. Having the power supply embedded and/or integrated in the HEG helps keep it small. It also allows access to the power lines for PLC communication. A small power supply can also be tuned to exactly the needs of the HEG, instead of selecting from a standard plug transformer, and avoid the risk of a consumer plugging in the wrong wall adaptor. The design also includes additional flame retardant materials in the housing, and securely attaches the outlet prongs to the housing.

Figure 4C shows reset button 400 (corresponding to block 312 of Figure 3) and Ethernet input 402 (e.g., 208 of Figure 3).

Turning now to the setup of the HEG, the consumer will need to configure HEG 102 to monitor energy consumption. Prior to starting to commission the HEG, the consumer will need to load specific Client Application Software (CAS) onto his computer or smartphone. Typically this software would be downloaded over the Internet or purchased from the phone provider. The software may be a general purpose Java application that will run on any PC, or it may be tailored specifically to the physical limitations and operating system of the device, which is common in the cellular phone business. Alternatively a Web CAS could also be used.

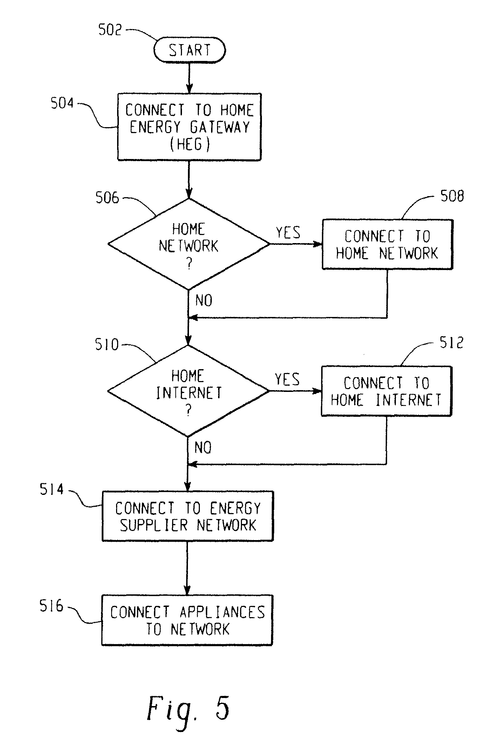

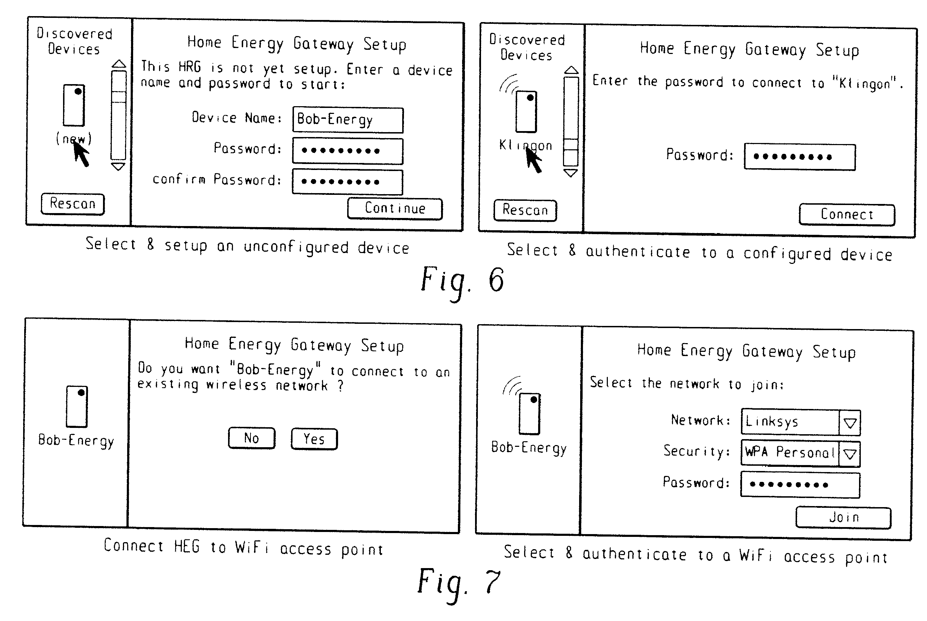

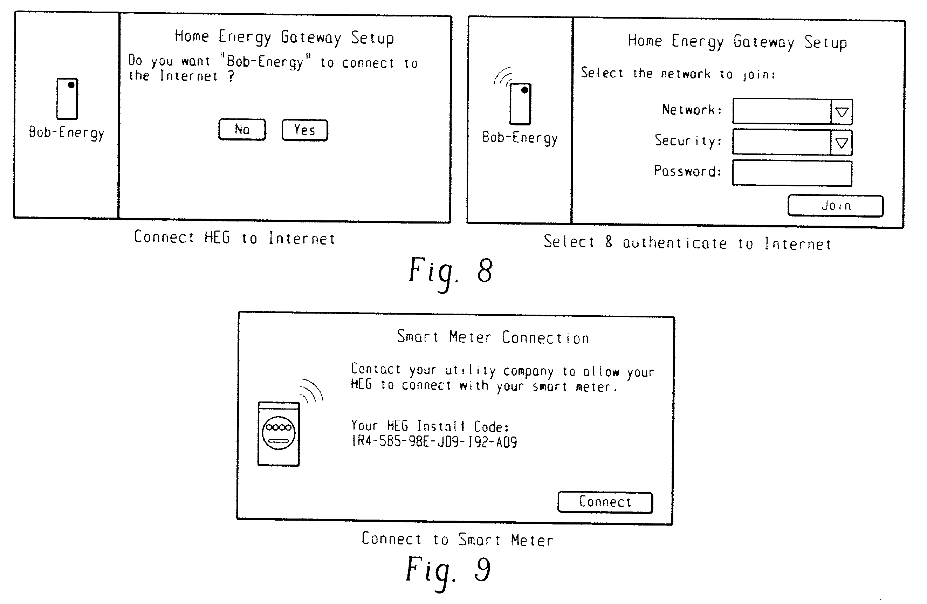

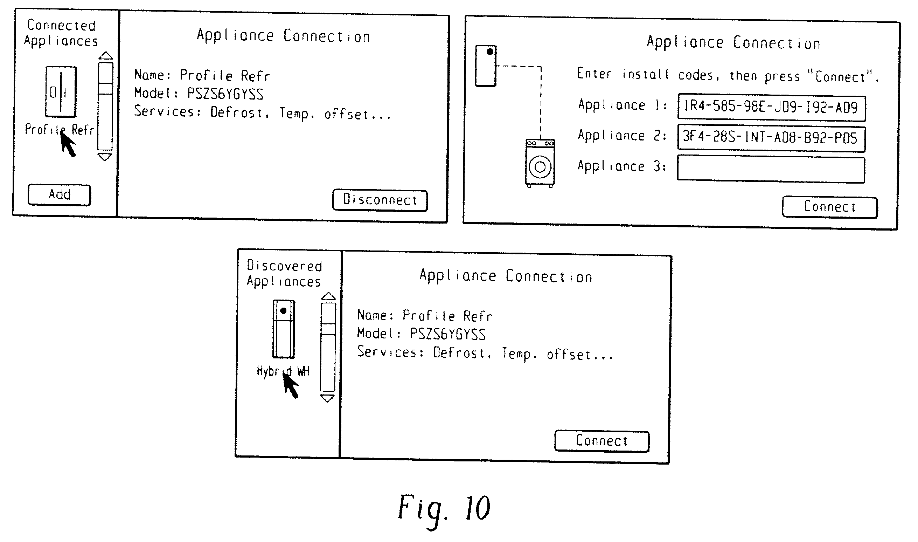

Figure 5 is a flow diagram 500 which illustrates, for one embodiment, the steps undertaken to achieve such configuration. An expanded discussion of Figure 5 is set forth in later sections of this disclosure. After starting 502, a user connects to the HEG 504 by providing the HEG with power (e.g., plugging it into a home outlet) and accessing the HEG via the CAS. The CAS allows the user to provide the HEG with a name so it may be identified in the network (see Figure 6). Once connected, if there is a home wireless network (such as WiFi) 506, the user may optionally connect the HEG to that network 508 (see Figure 7). Next, if the user has a home Internet connection 510, the HEG can be connected to this network 512 (see Figure 8). Once these steps are accomplished, the user connects the HEG to the energy supplier (e.g., Utility company) network 514 (see Figure 9). Finally, the user connects the appliances (and other systems) to the HEG 516 (see Figure 10).

### 1. Connecting to the device (Figure 6)

Turning now to Figure 6, as mentioned above, a particular beneficial aspect of the HEG 102 is the value and flexibility obtained by not having a dedicated, integrated user interface display. Not having such a display does require initial steps in the configuration of the HEG into the home energy network (or HAN) in order to connect the HEG to the network. These steps include:
a. Connect the HEG to its power source (e.g., a common home power outlet). This will power the LEDs (304-308) causing them to light.
b. Connect an Ethernet cable from computer to device to Ethernet input (208), or attempt peer-to-peer wireless connection (e.g., wireless input 204).
c. Install software on a smart phone, computer or other device capable of operating software.
d. Use the software which employs zero-configuration networking (such as the Apple Corps Bonjour from Apple Corp) to detect the HEG. Once the HEG is detected, the user provides the HEG with a name and password to prevent others from modifying their personal settings.

### 2. Connecting to home network (Figure 7)

As mentioned above, step 508 of Figure 5 is optional. However, for homes with WiFi network and where the HEG is attached via an Ethernet connection, step 508 is available. In this case, the Ethernet cable would be disconnected and the HEG moved to an out of the way home electrical outlet. By this action the consumer will still have access to the HEG over their home network but the HEG would not need a prime electrical outlet. If the HEG is replacing an HEM or other type of controller which has a built in or otherwise connected display and is therefore mounted on a wall for viewing of the display, the HEG in the wireless environment would of course not be mounted on a wall and could, again be, located in an out of the way electrical outlet. If the consumer does not have a home wireless network, they may continue to have the HEG connected to a router to share their Internet connection or remain directly connected to their computer if they do not have an Internet connection. If connected over WiFi the WiFi LED on the HEG will illuminate.

### 3. Connecting to home Internet (Figure 8)

This step is also optional, and is not required for the device to work. No special configuration is required on the HEG. Depending on the security implemented on the consumer's Internet connection, some modification to their router and/or firewall may be required. In some instances the use of the HEG may be advantageous over a "Cloud Computing" model for home energy control, as that the data storage for the HEG is local.

### 4. Connecting to energy supplier network (Figure 9)

Connection steps for connecting in a typical smart meter environment and for connecting in an Internet environment are now described.
a. The following describes the steps to take for a typical smart meter application.
   i. For a smart meter, either wired or wireless, the HEG will connect to the smart meter over a second network. The customer locates their install code that is displayed in their CAS. Alternatively the install code can be written on the HEG or supplied with its documentation. The customer then takes that install code and depending on their Utility either enters the install code into a browser window or they call their Utility's Customer Service Center.
   ii. Also they will add identifying information on the home that the HEG is in. Depending on the sophistication of the utility network, they may need to enter their address, account number off their bill, or they may need to call and get a special code to identify them.
   iii. Once this is complete, a command is sent from the CAS (e.g., of the software added to the homeowner's computing device) to the HEG over the IP Network to have the HEG start the joining process on the Utility network.
   iv. Once the appropriate security has been negotiated, the HEG will send a confirmation back to the CAS over the first IP network to indicate that the connection has been made.
   v. The HEG will also turn the Utility Network LED ON to notify the customer that it is connected. This allows for the customer to determine the state of the network just by glancing at the HEG, without connecting an I/O device.
   vi. The HEM will determine which of the devices on the Utility network is the homes billing meter. Multiple devices could say that they are a meter.
      1. This is simplest if there is only one meter on the Utility network, but there may be more (i.e., there may be sub-meters).
      2. Typically if there is a single device that is a meter and a Utility Services Interface (USI), the source of energy information (price load control commands etc.). That is the billing meter, although in some areas there is a separate device that acts as the Utility Services Interface (USI).
      3. If there are two devices that both are meters and neither is the USI, the HEG has to dig deeper. For example a plug-in hybrid electric vehicle (PHEV) charger could be on the Utility network as a meter and as a load control device, so it could be turned off during a grid emergency. Then the HEG would assign the one that is not a load control device as the Utility meter. It is noted some meters have disconnect switches installed inside of them, even in this case, the utility typically does not provide control of that switch to the HAN, but only on its backhaul network.
   vii. Any devices that are found by the HEG that are not the Utilities (revenue) meter are saved for configuring as part of the home network.
b. For Internet based energy supplier information.
   i. In this case the install code will typically not be required, since the Utility network is not being used. The customer will start by entering identifying information on the home that the HEG is in into a CAS window. Depending on the sophistication of the utility network, they may need to enter their address, account number off their bill, or they may need to call and get a special code to identify them. The may also have to enter a specific URI that indicates where to get the pricing information.
   ii. Once this is complete, an XML message command will be sent from the CAS to the HEG over the IP Network to have the HEG contact the utility information page over the internet.
   iii. Once the appropriate security has been negotiated, the HEG will send a confirmation back to the CAS over the first IP network to indicate that the connection has been made.

### 5. Connecting appliances to network. (Figure 10)

Typically appliances will be installed on a second network that is entirely maintained by the homeowner. The ZigBee network is used for this purpose in the exemplar, but that is not critical to the invention. Some devices, such as a Thermostat, or PHEV charger may be tied directly to the Utility network in the same manner as the HEG, if for instance, the PHEV qualifies for a different rate or the customer is getting a credit for allowing the Utility to control their HVAC. In this case the consumer can skip directly to step vi.
i. The customer will enter the install code of the device into a CAS window; the CAS will then transfer this message to the HEG over the first IP network.
ii. The HEG will create the third network and look for a device that is attempting to join. The third (3^{rd}) network LED will flash.
iii. The customer will then be asked to press a button or take similar action on the device to tell it to join the network. The precise action to take is dependent on the devices instructions.
iv. The HEG will exchange security information over the third network with the device and compare it with the information received over the first network. If the information indicated the device is to be trusted, it is let onto the network. In this case the third (3^{rd}) network LED will be lit.
v. The HEM will detect that there is a device on the network and will gain basic information about the device. The device will provide some configuration data, for example that it is a washer, a water heater, or that it is a load control device or a meter.
vi. The HEM will bring up a list of devices that it has found. For ease of identifying the devices, it is easiest if the consumer adds all the devices individually and fills in the identifying information on each as it is found. The consumer can also add a user-friendly name to his device at this time to make it easier to identify in the future.
   1. For a device with a device type of appliance, the consumer may need to add a name like refrigerator, or dryer.
   2. If there are multiple thermostats, the consumer may label one as upstairs and one as downstairs so that they can control them independently.
   3. Some devices will be added just as a meter. For example one such device may be a meter on a solar or wind generation panel. The customer will have the opportunity to select the identity of the device from a list. Based on this selection the HEG will identify the device as a load or source. This is important later when creating reports, because loads are a subset of the revenue meter, but the sources are additions to the revenue meter.
   4. Storage batteries will need to be identified as such so that the HEM can read a field to indicate direction of power flow. While current standards have this field as optional, it is assumed that a storage device would support it.
vii. The above steps can be completed as many times as the consumer desires, to add all of the devices they desire to the network. In addition to devices mentioned above, a whole host of home automation devices can be added, including but not being limited to motion sensors, door sensors, lighting controls, switches, smart plugs, bathroom scales. Anything which can function by turning on/off, adjusting up or down, or provides information on the amount of something can be easily integrated into the data structures of the HEG.

### 6. Connecting to an external server.

Just because the consumer does not have to use a cloud-computing device, does not mean that it cannot be done. For example, Google Inc. has a Google Power Meter (GPM) service. On the consumers CAS, they could select connect to GPM, and the data could be ported to the cloud server. Either the consumer or the cloud server may select only to accept a portion of the data. For example, the consumer may select to pass the utility power meter to the cloud server, so he can access it from work, or the cloud server may limit the consumer to two devices with 15 minute increments between points.

### 7. Connecting Zigbee Device

Numerous commercial devices are available for measuring and controlling plug loads and larger loads, as well as ZigBee home automation for controlling lights, security and comfort. One such example is the ZBLC30-Dual (30/15A) Relay with energy meter. This ZigBee 110/220V Dual-relay (30/15A) describes itself as a controller with energy meter which remotely controls high current heavy loads such as water heaters, pool pumps, pool heaters, electric vehicle charges, air conditioners, etc. Using the wireless ZigBee protocol allows the switch to constantly measure the power delivered to the load and report various parameters such as real and apparent power based on high accuracy industry standards. This makes possible the intelligent management of large appliances. Provided with both normally open (NO) and normally closed (NC) contacts for maximum flexibility including fail-safe configurations.

### 8. Connecting an External device.

There are numerous devices available to consumers which have Ethernet or WiFi capabilities. For example a Pentair pool controller from Pentair Water Pool and Spa, or an alarm system controller from Smart Home, are just two examples.

By use of a special purpose application program "APP" these and other such devices can communicate with the consumer's energy management system so that they can make adjustments to all of the systems in one place and set their own priorities. These apps are loaded by the same update program which manages the HEG software.

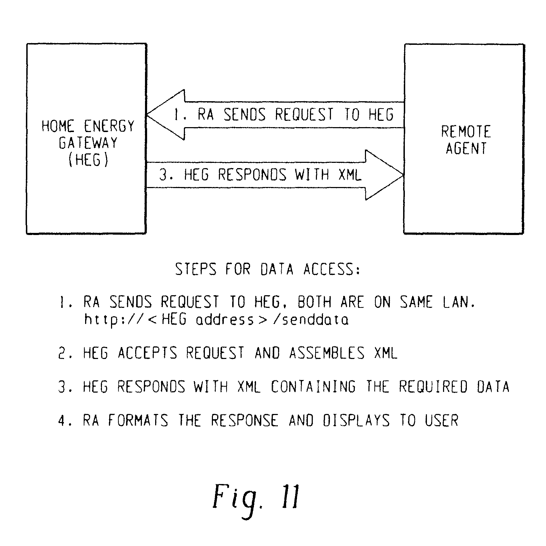

Turning now to the operation of the HEG, set out below are examples of various data flows which can be obtained by use of the HEG.
**1. Power consumption data from meter to database.**
   a. HEG sets up a timer.
   b. Periodically pings meter for consumption on 2nd network.
   c. Stores consumption data in data base.
**2. Price signal to an appliance using.**
   a. HEG receives a price schedule or price change from Utility over 2nd network.
   b. HEG stores price data in table in memory for future use in calculating cost reports.
   c. HEG reviews scheduling priorities received from consumer over 1st interface.
   d. HEG sends load shed command to appliance or system (e.g, pool pump disconnect box) over 3rd network.
**3. Utility direct load control command to load control box on a pool pump.**
   a. HEG receives a price schedule or price change from Utility over 2nd network.
   b. HEG reviews scheduling priorities received from consumer over 1 st interface.
   c. HEG sends load shed command to pool pump disconnect box over 3^{rd} network.
**4. Power consumption from a smart appliance to database**
   a. HEG sets up a timer.
   b. Periodically pings meter for consumption on 2nd network.
   c. Stores consumption data in data base.
**5. Daily power consumption cost chart to hand held device. (****Figure 11****)**
   a. Handheld contacts HEG over 1st Interface (WiFi), sending scripted request for data.
   b. HEG reviews database and assembles data requested. Either the HEG could retain cost data in a single table, or it could pull consumption and price data from separate tables and combine into cost data.
   c. HEG formats data for report using open scripting commands such as XML.
   d. HEG sends requested information to Handheld over 1st interface.
**6. Power consumption data from HEG to external server.**
   a. Consumer sets up conditions for transmitting data to external server over 1st interface.
      i. Consumer selects server from list or types in URL
      ii. Consumer selects how frequently data is to be ported
      iii. Consumer selects which data is to be ported
   b. HEG sets up timer to meet consumer's request.
   c. HEG assembles the subset of data requested by the consumer and formats for transmission on Internet.
   d. HEG posts data to webserver that consumer has selected.
**7. Message from Utility to Computer Display.**
   a. HEG receives text message from Utility over 2nd interface.
   b. HEG reviews instructions from consumer on where Utility messages should go (Computer screen, Thermostat Screen, TV Set, Hand Held, Dedicated energy display) received over 1st interface.
   c. HEG formats message appropriately for Interface and pushes message to appropriate display device.

Once the consumer has the HEG connected to meters and devices and collecting data they can start to take advantage of its capabilities. A particular benefit of this system, which uses the HEG without a dedicated or integrated display, is the ability to use a high quality display to view data and interact with appliances without having to pay for it separately. Many consumers already have large displays of 17", 35", even 52" diagonals that they use for entertainment systems. Many of these devices already are provided with Web CASs. Accessing the electricity consumption of a home on a TV screen will provide a more readable display of their consumption habits to the consumer than the small monochrome in-home displays that Utilities have been using in pilots. In addition being able to look at the change in energy consumption when you turn on a range or dryer, the present design provides consumers with an increased awareness of where there energy dollar is going. Because the consumer displays (e.g., TVs, computers, smart phones) are adapted to graphical display, they are well suited to display this type of information.

This improved interface also allows the consumer to fine tune their response for different appliances with more detail than was possible over a typical appliance control screen. This customization can be done either in conjunction with energy prices, weather information, time of day, occupancy or other external parameter, or just as a user defined rule without any outside parameters.

A first example: A dishwasher cycle is delayed because of high energy costs. However the water heater is not heating either. The HEG provides the consumer with the option of waiting until the water heater has caught up before starting the dishwasher.

Another dishwasher option: The consumer can determine to not allow (or always require) heated dry, extra pre-washes, or extra heat on a dishwasher at any time, despite what is selected at the controls of the dishwasher. This feature may be valuable for people whose children are assisting with meal clean up.

A second example: The consumer starts their dryer in a delay start mode, but before the delay time is completed energy price goes up. The consumer will be asked if they still want the dryer to start when scheduled.

An additional dryer example is to limit the maximum heat regardless of the energy level selected. This balance of saving energy at the expense of drying time could be made at any time, or could be done to prevent children or spouse from damaging garments by drying at too high a temperature.

An example of using weather is to prohibit dryer operation when the external temperature was above 80 degrees to avoid competing with the air conditioning, or to prohibit dryer use if the sun was shining and line-dry clothes instead.

A third example: The consumer can automate the decision for which of various modes he would like his water heater to operate in. Depending on the water heater, the modes that can be selected from include: Electric Resistive Heaters Cal Rod, Electric Heat Pump, Gas, Solar, and Off. He can use electric price, weather, gas price and home occupancy to select from.

A washing machine example. The consumer could use this feature to control which temperatures can be selected, or prohibit using the washer at certain electric costs.

The improved user interface is also an advantage when programming devices. Programmable thermostats are often hard to program via their limited user interfaces. For example, you have to push the menu button twice, then the left button, then the down button to set the hour, then the left button, until a full schedule of 7 days with 4-6 events per day have been loaded. The user interface on the HEG with a computer or smartphone can display it graphically. Because the consumer is familiar with the interface, the commands are more intuitive. They can drag and drop changes of times, and copy and paste of one days schedule to a different day. Once they are happy with the schedule, they can save the whole schedule and then send it to the HEG over a high data rate Ethernet/WiFi connection. The HEG will save the schedule internally. A customer can build a number of schedules. Winter (Heating), Summer (Cooling), Summer Vacation (Home empty, cool just slightly, circulate outside air at night); Summer Kids Home (Cool During the day) etc. After the customer selects one to load, the HEG loads the schedule to the thermostat. Thereafter the customer can change schedules and return to the original schedule without needing to reenter information.

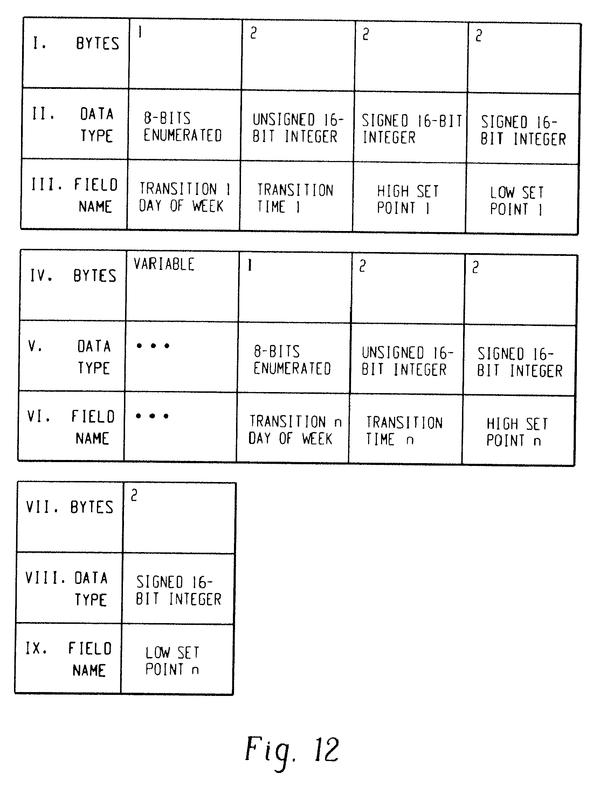

Turning now to Figure 12 shown is an example of the data portion of a message payload that could be used to send a schedule to a thermostat. Appropriate headers and checksum fields can be added based on the exact communication protocol established.

The row Bytes is the size of the field. The Data Type and Field Name describe the type of data in each field. The schedule consists of a series of Transition times, high set points, and low set points. Each set point is scheduled to be in effect until the next transition. The variable field can contain multiple transitions until a final (nth) transition for a given day. At midnight the schedule will continue the prior days last transition until the first transition of the new day. The Day of Week field identifies the day that is being scheduled. Where Day 0 is Sunday, Day 1 is Monday, Day 2 is Tuesday etc. Alternatively a bitmap field could be used to set the same schedule into multiple days simultaneously. The variable field can contain repeated Transitions.

The example of a thermostat programming is not limited to a thermostat, but could be included with anything that normally runs on a schedule. A different example could be a pool pump and spa controller, where high set point is spa temp and low set point is the pool temp.

Another application is setting pool pump run times, where the high and low set points can be set at 0 and 100 to control off and on. A variable speed controller could use 1-99 to indicate a percentage of full run.

This on off scheduling could also be used with a water heater controller so it would not maintain water temperature when the homeowner is scheduled to be at work.

The HEG relies on a number of different software sets. There is software on the HEG itself. There is a second piece of software on the desktop or laptop computer used to configure the HEG and gather data from it. There is a third piece of software on the smart phone. The phone and computer may be further defined by the operating system, or may take advantage of a platform like Java that allows the programs to operate on multiple operating systems. Each of these can be upgraded independently of each other. The desktop (or laptop) and smart phone Apps also have a service for the HEG. They can ping a server (e.g., if from General Electric, a GE server) every day checking for the latest software release. As new software becomes available, either to correct issues or add features, they can down load the newest HEG software and the push it down to the HEG. This way the software sets can be upgraded independently of each other.

Once the HEG knows which appliances are on the network, it can also check the server for updates for those devices, and download that software if needed.

In addition, the present system allows for provisioning (i.e., preparing the system to accept new services) whereby special purpose software can be downloaded. When the customer buys a new washer, and enters its model. The software can contact the GE server, and be given an app to download. This app allows the consumer to set more detailed control of the appliance. It would know for instance this particular washer has five wash temperatures. It would then provide the customer with the opportunity to customize their wash experience. For example the customer could set the washer to not ever allow sanitation cycles and only allow hot wash when electric prices are at or below a threshold price (e.g., < $.15 a kWhr). Alternatively the customer may decide that since they are on a gas water heater, the HEG should not control water temp when electric price changes. Another function that the washer could have is a delayed start feature. If the washer is in the delayed start, the customer could (through the HEG) either tell the washer to start now, or to delay its start even longer.

Another specific example of software that can be downloaded is monitoring software. This software could be loaded as part of registering the appliance, or the consumer could download and run as part of troubleshooting an issue before deciding to schedule a service call. Either on a preventative basis or in response to a service issue, specific software could be used that checks for issues in the appliance. A fairly simple implementation would be to have the software check for service error codes and present them. Most major appliances with electronic controls have fault code embedded. Fault codes can include things like "excessive fill time" on a clothes washer, "detergent tank empty" on a dishwasher, etc.

A more elaborate appliance can be provided with power monitoring features that would have the appliance check different components and determine if the power draw characteristics are correct. Such power monitoring could be performed by a sub-meter device having a sensor for collecting data from a power supplying conductor delivering power to the appliance. The sensor can be configured to collect data relating to electrical usage of the appliances components and/or properties of the power provided to the device via the power supplying conductor .

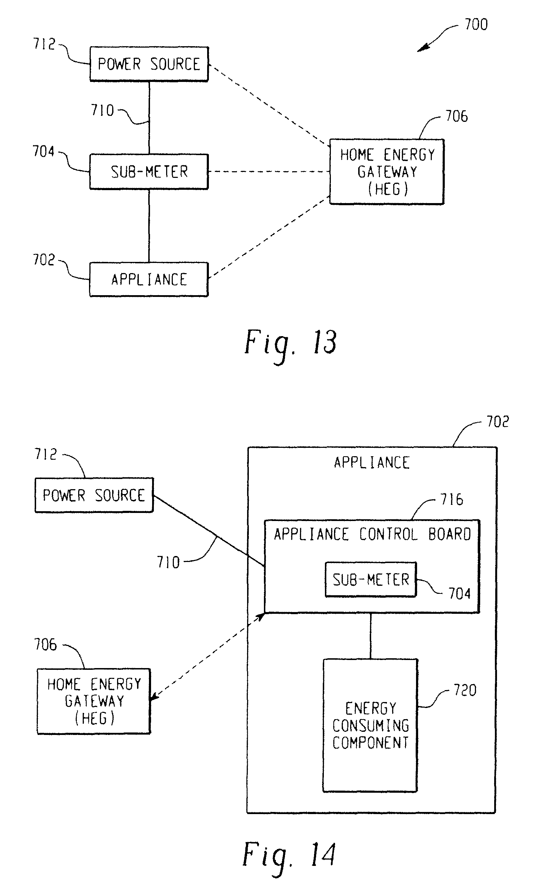

With reference to Figure 13, a home energy management system 700 includes an energy consuming device, in the form of an appliance 702, a sub-meter device 704 and an HEG 706. Power is supplied to the appliance 702 via a power supplying conductor 710 that delivers power from a power source 712, such as a residential distribution panel (for hardwired appliances) or an electrical outlet, for example. Each of the components can be configured to communicate with the HEG 706 as described previously. As will be appreciated, the power supplying conductor 710 supplies power directly to the appliance 702 and is an end-of-line *(i.e.,* terminal) conductor such that power delivered by the power supplying conductor 710 is only used by the appliance 702 (in a typical installation). In Figure 13, the sub-meter device 704 is a module that can be added to a home energy management network. In this regard, the sub-meter 704 can be a plug module (e.g., a wall-wort) that plugs into a wall outlet and includes an outlet for receiving a plug from the appliance (or other device.) Alternatively, the sub-meter can be included as part of a device's power supply cord, or as a stand-alone unit. With further reference to Figure 14, the sub-meter 704 can also be integrated into a control panel 716 of the appliance 702, or provided on a daughter panel acting as a slave to the control panel.

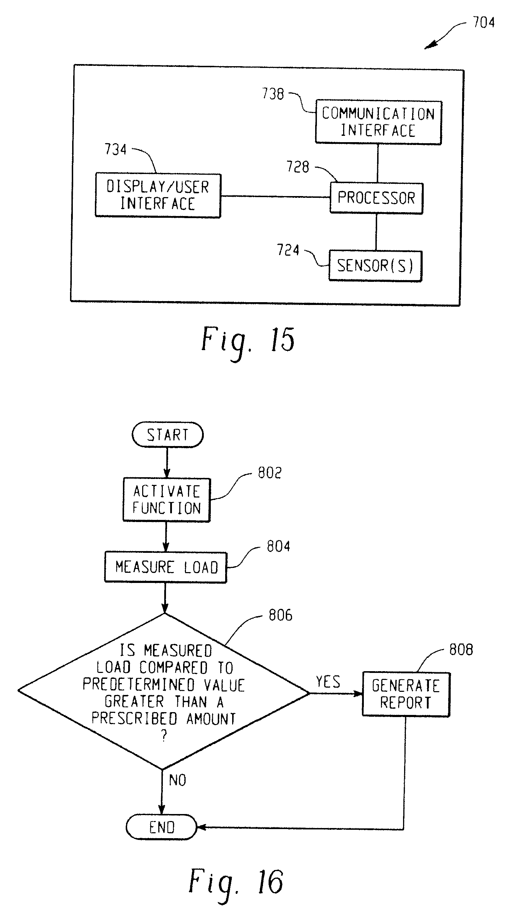

Turning now to Figure 15, the details of the exemplary sub-meter 704 will be described. The sub-meter device 704 includes at least one sensor 724 for collecting data relating regarding the supply of power delivered to the appliance/energy consuming components, including real power consumption, reactive power consumption, line frequency, line voltage, power factor, leading/lagging voltage-current comparison, and apparent power. The sensor 724 can be at least one of a current transformer, Rogowski coil, shunt resistor, or hall effect sensor, for example. The data collected by the sensor 724 is read by a processor 728 which is configured to then display the information on a display 734 of the device 704 and/or communicate the data via a communication interface 738 to another device (typically the HEG) for use by that device in connection with the control of the appliance within the home energy management system. As will be appreciated, the sub-meter 704 may also include additional hardware such as memory, additional communication interfaces (e.g., wi-fi, Bluetooth, Ethernet, etc) for communicating with additional devices or the appliance itself, a controller, etc.

Since the sub-meter 704 can collect real-time data relating to the operation of the appliance, it is uniquely positioned to perform diagnostics on the appliance or other device to which it is attached. For example a refrigerator "knows" that it has a 600W defrost heater. During defrost, the sub-meter measures the power consumption of just the defrost circuit and reads 0 watts. This would be an indication that potentially the defrost heater had failed open. The sub-meter could similarly be configured to measure operation of various energy consuming components and/or functions of the refrigerator (e.g., lights, icemaker, ice crusher, etc.) to detect other potential problems with the unit.

As will be appreciated, rather than measuring each circuit within the refrigerator, another method would be to install a sub-meter that measures only the entire circuit of the appliance. A reading of 620W could be interpreted as normal, a reading of 800W could indicate that the defrost heater was on and the compressor was running, a condition that should not occur under normal operation. A reading of 800W could also indicate that the wrong heater (e.g., from a different model) was installed. While a sub-meter that could monitor each circuit within the refrigerator could distinguish between these two possibilities, since the end result is a service technician needs to visit the machine it may be an appropriate cost trade off.

An appliance could also rely on the network for these power consumption measurement. For example the appliance (or appliance communication module) could ask the meter (or the HEG) for the whole home power consumption before starting the cycle. Again after the motor has started, and then again when the heater was turned on. If it received 2.03kW, 2.67kW, 6.72kW it could assume that everything was OK. Other devices in the house transitioning at the same time would influence this measurement, for example a 5.1kW, 5.7kW, 6.7kW could either mean that the heater was only drawing 1kW or that it was drawing the correct 4kW, but that the 3kW air conditioner shut off at the same time. Repeated measurements over multiple cycles would be necessary to check this.

By sending the data from the sub-meter to the HEG, the HEG can perform such calculations. Performing the calculations in the HEG would provide an additional benefit in that if it is tracking the thermostat (which control HVAC on/off), dryer, range, and electric water heater, for example, it would be able to resolve more easily the situation where multiple devices come on and off.

Turning to Fig. 16, a flow chart illustrating an exemplary method of performing diagnostics using the sub-meter 704 (or other sensor) is illustrated. The method begins with process step 802 wherein a function of the device that draws an electrical load is activated. Activating a function of the device can include switching the device on, varying a speed, varying an intensity, varying a brightness, and varying a duty cycle, etc. This step can be performed by a controller associated with the device, or can be the result of a user being prompted to activate the feature (e.g., opening a refrigerator door). In process step 804, the electrical load is measured with the sub-meter device. In process step 806, the measured electrical load is then compared to a predetermined value corresponding to normal operation of the function of the device to determine if the device is operating normally. If the difference between the measured load and the predetermined value is greater than a prescribed amount, a report identifying the device and/or function, etc., is generated in process step 808. Otherwise, the method terminates. As will be appreciated, the process may repeat until all functions are tested.

For major appliance, the predetermined value can be stored in memory for each component or state of each component of the appliance. For a complex device, such as an inverter, the predetermined value can be calculated continually based on RPM, Phase angles, drive voltages, frequencies and other parameters which are well known to an inverter designer. Such method works well for devices with a fixed number of configurations that ship from the factory. For a thermostat that can control a number of different HVAC units, or a pool controller that can control a number of different pumps, the most effective solution may be to load the model number of the power-consuming device into the HEG. The HEG can then use its Wifi or Ethernet interface to download the expected wattage from a remote database over the internet.

For some devices such as fans, pumps, and compressors, the expected value is even more difficult to obtain. These devices, among others, are affected by their ambient environment. Fans and pumps are impacted by the head losses or pressure drops in the system. A washer pumping to an 8' standpipe draws more current than a washer pumping into a 4' standpipe. A clothes dryer attached directly to an outside wall has very low losses and is pushing a lot of air, generating a high power draw, while one with an extended duct has more losses and lower airflow resulting in a lower current draw. To some degree this change in power also depends on the design of the motor. For compressors, the power draw is dependent on the temperatures of the evaporator and condenser.

For a pool pump, in addition to the nameplate the pipe size is important. After the pump is installed, the HEG and/or sub-meter can measure a number of pump on/off cycles and determine a baseline power draw. As the filter gathers debris, the flow rate will decrease and the power consumption will change in predictable way. When the power consumption has changed enough, the consumer can be given an indication to backwash their filter or change the filter element. Over time the HEG can monitor the health of the appliances, either passively by looking at performance or actively by getting health, maintenance, and diagnostic info from the appliance.

An example of passive operation is the monitoring a dryer. The HEG can notice that the dryer says it is in high heat, but never goes over 3kW. If this occurs on a single occasion this may be a loading or airflow condition, but if it happens repeatedly, it may be a failed open heater. In a more active role, the HEG could ping a dishwasher, and ask it for all of its error codes. The HEG can then send that information to the dishwasher manufacturer, either automatically or upon the customer's request, or make it available to the customer on a display when they call for service, thereby assisting the manufacturer in troubleshooting the unit. Alternatively, the customer could download more detailed analytical software if they were having issues with a specific appliance that could run diagnostics on the appliance and sends the results back to the manufacturer so the technician could arrive with the correct part.

In addition to monitoring for service, the monitoring software can also keep the consumer up to date on the status of their home. For example the time remaining on an oven self-clean, the end of cycle on a dishwasher, or the current hot water tank temperatures could be communicated to the HEG by appliances over a the low bandwidth third network. This info can then be sent to the consumer via the first interface to a WiFi enabled smart phone or Web enabled television, or possibly a Bluetooth device. It could also be sent to him outside of the hoe by email, SMS text message or similar method.

Another option during provisioning is to download a software set that customizes the display so that it essentially duplicates the features of the appliance, but uses large font and improved colors for people with poor visual acuity. People with vision impairment could use a 17" screen with black numbers on a yellow background to set the temperatures on the refrigerator or schedule the self clean on an oven.

Other special purpose software may be offered in conjunction with a Utility company. The customer may have a special code from their Utility company which downloads a software set that tracks air conditioner thermostat setpoints and passes that information back to a Utility company server. The customer then gets a bonus for maintaining certain target temps, and by not overriding setpoint changes during grid emergencies.

Another set of specialty software is for commercially available devices. If the customer buys a device from a third party, they can log on and download the software that blends that device into their network. It may be lighting controls, the pool controller mentioned earlier, or a third party thermostat.

As mentioned in the foregoing discussion, the HEG of the present application is particularly useful in a home energy management network and may receive communication from existing controllers (such as HEMs) and/or replace the controllers (HEMS) in such networks. For example in the following Exhibit A (U.S. Serial No. 12/559,703), which is considered part of this disclosure, describes a home energy management system having a controller which may be replaced by the HEG described above.

The foregoing discussion has described various aspects of the software set-up of the HEG and various operations related thereto, as for example set out in connection with the text associated with Figures 5-12. Exhibit B, which is considered part of this disclosure continues and expands upon that discussion.

Various aspects and embodiments of the present invention are defined by the following numbered clauses:
1. An energy consuming device comprising;
   at least one energy consuming component;
   a sensor for collecting data from a power supplying conductor delivering power to the device, the sensor configured to collect data relating to electrical usage of the at least one component and/or properties of power provided to the device via the power supplying conductor; and
   a communication interface for communicating the data.
2. An energy consuming device as set forth in clause 1, wherein the sensor collects data relating to at least one of real power consumption, reactive power consumption, line frequency, line voltage, power factor, leading/lagging voltage-current comparison, and apparent power.
3. An energy consuming device as set forth in clause 1 or clause 2, wherein the sensor and communication interface are included in a sub-meter module.
4. An energy consuming device as set forth in any preceding clause, wherein the sensor includes at least one of a current transformer, Rogowski coil, shunt resistor, or hall effect sensor.
5. An energy consuming device as set forth in any preceding clause, wherein the communication interface further comprises a display for displaying the collected data to a user.
6. An energy consuming device as set forth in any preceding clause, further comprising a control board for controlling at least one aspect of operation of the energy consuming device, wherein the sensor is included on the control board, or as a daughter board in communication with the control board.
7. An energy consuming device as set forth in any preceding clause, wherein the energy consuming device is at least one of a washer, a dryer, a refrigerator, a freezer, a cooking product, range, a water heater, dishwasher, dehumidifier, and HVAC equipment.
8. A sub-meter device for monitoring usage of an energy consuming device in a residential energy management system comprising:
   a sensor for collecting data from a dedicated power supplying conductor delivering power directly to the energy consuming device; and
   a communication interface for communicating the data to a remote energy management system device;
   wherein the sensor is configured to collect data relating to electrical usage of the device and/or properties of power provided to the device via the power supplying conductor.
9. A sub-meter device as set forth in clause 8, wherein the sensor collects data relating to at least one of real power consumption, reactive power consumption, line frequency, line voltage, power factor, leading/lagging voltage-current comparison , and apparent power.
10. A sub-meter device as set forth in clause 8 or clause 9, wherein the at least one sensor and communication interface are contained in a common housing.
11. A sub-meter device as set forth in any of clauses 8 to 10, further comprising a second communication interface for communicating with the energy consuming device.
12. A sub-meter device as set forth in any of clauses 8 to 11, wherein the sensor and communication interface are contained in a modular housing having at least two prongs designed to be plugged into a wall outlet for receiving power, and having a socket for receiving the power supplying conductor for transmitting power to the energy consuming device, whereby the common housing can be plugged into a wall socket and the energy consuming device can be plugged into the socket of the housing.
13. A sub-meter device as set forth in any of clauses 8 to 12, wherein the sensor includes at least one of a current transformer, Rogowski coil, shunt resistor, or hall effect sensor.
14. A sub-meter device as set forth in any of clauses 8 to 13, further comprising a display for displaying the collected data to a user.
15. A sub-meter device as set forth in any of clauses 8 to 14, wherein the sensor is integrated into a power supply cord of the energy consuming device.
16. A residential energy management system comprising:
   an energy consuming device;
   a power supplying conductor connected to the energy consuming device for delivering power thereto;
   a sub-meter device as set forth in clause 8;
   an energy management controller configured to control at least one aspect of operation of the energy consuming device;
   wherein the at least one sub-meter device includes a communication interface for communicating the collected data to the energy management controller for use by the energy management controller in controlling the energy consuming device.
17. A residential energy management system as set forth in clause 16, wherein the energy consuming device is an appliance, and the sub-meter device is integral with the appliance.
18. An energy management controller for a residential energy management system comprising:
   a processor; and
   a communication interface for communicating with a sub-meter device as set forth in clause 8.
19. An energy management controller as set forth in clause 18, wherein the processor is configured to control at least one aspect of operation of the energy consuming device in response to data received from the sub-meter device.
20. A method of managing a residential energy consuming device comprising:
   using a sensor to collect data from a power supplying conductor delivering power to the energy consuming device;
   communicating the collected data to an energy management controller remote from the sensor; and
   controlling at least one aspect of the operation of the energy consuming device in response to the collected data;
      wherein the sensor is configured to collect data relating to electrical usage of the device and/or properties of power provided to the device via the power supplying conductor.

## Claims

1. An energy consuming device comprising;
at least one energy consuming component (114a - 114k);
a sensor (724) for collecting data from a power supplying conductor (710) delivering power to the device, the sensor (724) configured to collect data relating to electrical usage of the at least one component and/or properties of power provided to the device via the power supplying conductor; and
a communication interface (738) for communicating the data,

2. An energy consuming device as set forth in claim 1, wherein the sensor collects data relating to at least one of real power consumption, reactive power consumption, line frequency, line voltage, power factor, leading/lagging voltage-current comparison, and apparent power.

3. An energy consuming device as set forth in any preceding claim, wherein the sensor and communication interface are included in a sub-meter module (704).

4. An energy consuming device as set forth in any preceding claim, wherein the sensor includes at least one of a current transformer, Rogowski coil, shunt resistor, or hall effect sensor.

5. An energy consuming device as set forth in any preceding claim, wherein the communication interface further comprises a display (734) for displaying the collected data to a user.

6. An energy consuming device as set forth in any preceding claim, wherein the energy consuming device is at least one of a washer, a dryer, a refrigerator, a freezer, a cooking product, range, a water heater, dishwasher, dehumidifier, and HVAC equipment.

7. A sub-meter device for monitoring usage of an energy consuming device in a residential energy management system comprising:
a sensor for collecting data from a dedicated power supplying conductor delivering power directly to the energy consuming device; and
a communication interface for communicating the data to a remote energy management system device;
wherein the sensor is configured to collect data relating to electrical usage of the device and/or properties of power provided to the device via the power supplying conductor.

8. A residential energy management system (700) comprising:
an energy consuming device (702);
a power supplying conductor (710) connected to the energy consuming device for delivering power thereto;
a sub-meter device (704) as set forth in any preceding claim;
an energy management controller (516; 706) configured to control at least one aspect of operation of the energy consuming device;
wherein the at least one sub-meter (704) device includes a communication interface (738) for communicating the collected data to the energy management controller for use by the energy management controller in controlling the energy consuming device.

9. An energy management controller for a residential energy management system comprising:
a processor; and
a communication interface for communicating with a sub-meter device as set forth in claim 8,

10. A method of managing a residential energy consuming device comprising:
using a sensor to collect data from a power supplying conductor delivering power to the energy consuming device;
communicating the collected data to an energy management controller remote from the sensor; and
controlling at least one aspect of the operation of the energy consuming device in response to the collected data;
wherein the sensor is configured to collect data relating to electrical usage of the device and/or properties of power provided to the device via the power supplying conductor.
